# EUROPÄISCHE PATENTSCHRIFT

(11) **EP 4 185 449 B1**
(45) Veröffentlichungstag und Bekanntmachung des Hinweises auf die Patenterteilung: **21.02.2024**
(21) Anmeldenummer: 22735766.2
(22) Anmeldetag: 13.06.2022
(51) Int. Cl.: B29C 48/255, B29C 48/265, B29C 48/69

(54) **MEHRWEGEVENTILEINHEIT FÜR KUNSTSTOFFSCHMELZEN UND ANDERE MITTEL- BIS HOCHVISKOSE FLÜSSIGKEITEN**
MULTIPORT VALVE UNIT FOR PLASTIC MELTS AND OTHER MEDIUM- TO HIGH-VISCOSITY FLUIDS
UNITÉ VANNE MULTIVOIES POUR MÉLANGES FONDUS DE PLASTIQUE ET AUTRES FLUIDES DE VISCOSITÉ MOYENNE À ÉLEVÉE

(30) Priorität: 18.06.2021 DE 102021115905
(43) Veröffentlichungstag der Anmeldung: 31.05.2023
(73) Patentinhaber: Gneuss GmbH, 32549 Bad Oeynhausen (DE)
(72) Erfinder: GNEUSS, Daniel, Charlotte (US); GNEUSS, Stephan, 32547 Bad Oeynhausen (DE); GNEUSS, Detlef, 6919 Carabietta (CH)
(74) Vertreter: Tarvenkorn, Oliver
(86) Internationale Anmeldenummer: PCT/DE2022/100439
(87) Internationale Veröffentlichungsnummer: WO 2022/262904

(56) Entgegenhaltungen:
- EP-A2- 1 167 844
- WO-A1-03/090999
- DE-B3-102016 113 979

## Beschreibung

Die Erfindung betrifft eine Mehrwegeventileinheit für Kunststoffschmelzen und andere mittel- bis hochviskose Flüssigkeiten, mit den Merkmalen des Oberbegriffs des Anspruchs 1.

Eine Mehrwegeventileinheit ist aus der DE 100 30 584 A1 bekannt. Das wenigstens eine zwischen zwei Gehäuseplatten drehbar gelagerte Umschaltelement schaltet auch bei den bei Kunststoffschmelzen typischen hohen Drücken und hohen Temperaturen zuverlässig. Eine Ausführungsform mit einem Umschaltelement ist als 3/2-Wegeventil konfiguriert und ermöglicht, den Hauptfließweg von einem Einlasskanal wahlweise auf einen von zwei Ausgängen zu lenken. Mit zwei kreisscheibenförmigen Umschaltelementen wird ein 4/7-Wegeventil geschaffen, das umfangreiche Umschaltmöglichkeiten zwischen den insgesamt vier Anschlüssen erlaubt. Damit können zwei getrennte Kreisläufe nebeneinander betrieben werden und wechselweise Überleitungen dazwischen geschaffen werden. Da das Umschaltelement als kreisrunde Scheibe ausgebildet ist, ist ein entsprechend großes Gehäuse vorgesehen, so dass ein großer Bauraum für die Aufstellung der Mehrwegeventileinheit benötigt wird. Außerdem wird im Moment der Umschaltung durch Drehung des wenigstens einen Umschaltelements der Fluidstrom unterbrochen, was zu Problemen durch Druckspitzen in vor- und nachgeschalteten Produktionsmitteln führt.

In der WO 2003 090 998 A1 wird eine einfache Filtriervorrichtung beschrieben, bei durch Schwenken eines Siebträgers mit zwei Siebelementen jeweils das eine oder das andere Siebelement in den Produktionsstrom eingeschwenkt werden kann. Bei der Umschaltung zwischen den beiden Siebstellen wird der Produktionsstrom unterbrochen. Die Nutzung als Umschaltventil ohne Filtrierfunktion ist nicht beschrieben und auch noch nicht möglich, da ausgangsseitig keine zwei abzweigenden Leitungen anschließbar und auch an dem beweglichen Siebträger keine Umschaltmöglichkeit vorgesehen ist.

WO 2003 090 997 A1 beschreibt eine sehr einfache Siebwechselvorrichtung, bei der eines von zwei auf einem segmentförmigen Träger angeordneten Sieben durch Schwenken des Trägers in den Produktionsstrom gebracht bzw. daraus herausgeholt werden kann. Bei der Umschaltung zwischen den beiden Siebstellen wird der Produktionsstrom unterbrochen. Umschaltmöglichkeiten über Nebenfließkanäle usw. sind nicht offenbart.

Die DE 10 2009 014 029 B4 beschreibt ein Umschaltventil, mit dem zwar das Ziel erreicht wird, den Produktionsstrom auch während der Umschaltung von einer Ausgangsleitung auf die andere Ausgangsleitung nicht zu unterbrechen. Die Bauweise ist jedoch völlig unterschiedlich zu einer gattungsgemäßen Mehrwegeventileinheit, denn sie basiert auf einem zylindrischen Bolzen, der in einer Bohrung eines Gehäuses axial verschiebbar ist. Zur Erzielung einer dichten Verbindung ist ein hoher Fertigungsaufwand für die Passung zwischen Bolzen und Bohrung erforderlich. Eine mit Materialabtrag verbundene Nachbearbeitung ist z.B. nicht möglich.

Die Aufgabe der Erfindung besteht somit darin, eine für Kunststoffschmelzen und Fluide mit ähnlich hoher Viskosität geeignete Mehrwegeventileinheit zu schaffen, die eine Überleitung des Fluids von einem Hauptfließkanal zu wenigstens einem Nebenfließkanal ermöglicht und die einen geringeren Platzbedarf hat und die einfacher zu fertigen und nachzubearbeiten ist als z.B. bei einem Umschaltventil mit einem Zylinderbolzen.

Diese Aufgabe wird durch eine Mehrwegeventileinheit für Kunststoffschmelzen mit den Merkmalen des Anspruchs 1 gelöst.

Nach der Erfindung ist zum einen vorgesehen, dass das Umschaltelement segmentförmig ausgebildet ist, insbesondere kreissegmentförmig. Die Lagerung erfolgt nicht direkt randseitig, sondern die Schwenkachse ist in Richtung des Zentrums des Segments versetzt. Dabei dient die schmale Seite des Segments als Schaltnocken, an dem eine Verbindung zu einem Antrieb, wie insbesondere einem linear wirkenden Antrieb durch einen Hydraulikzylinder, hergestellt wird.

Die durchfließbaren Ausnehmungen sind in dem weiteren Teil der Segmentfläche angeordnet und die Schwenkachse befindet sich dazwischen. Indem die durchfließbaren Ausnehmungen auf einem Kreissegment angeordnet werden, das insbesondere eine Größe von 1/6 bis zu 1/8 eines Vollkreises hat, wird deutlich weniger Bauraum benötigt als bei dem bekannten Mehrwegeventil mit wenigstens einer Kreisscheibe als Umschaltelement.

Außerdem sieht die Erfindung eine Konfiguration vor, bei der die durchfließbaren Ausnehmungen für Haupt- und Nebenfließkanäle radial voneinander entfernt angeordnet sind oder sich zwischen zwei unterschiedlichen Teilkreisen erstrecken. Damit ist der druckbeaufschlagte Bereich auf einen schmalen, zu einer einzigen Radiuslinie benachbarten Bereich reduziert und kann gut abgedichtet werden.

Der Aufbau des Gehäuses ist ähnlich zu dem von Siebrad-Filtriervorrichtungen, das heißt, das bewegliche Umschaltelement ist zwischen einer Einlaufplatte und einer Auslaufplatte gelagert, wobei die Ein- und die Auslaufplatte durch eingefügte Zwischenplatten und/oder durch andere Distanzelemente so auf Abstand zueinander gehalten werden, dass jeweils ein minimaler Spalt zwischen dem Umschaltelement und der Ein- und Auslaufplatte besteht, der eine Bewegung des Umschaltelements erlaubt, aber den Austritt von Fluiden mit entsprechend hoher Viskosität verhindert.

Der druckbeaufschlagte Bereich sollte sich innerhalb eines Polygons befinden, das durch mehrere Spannelemente aufgespannt wird, welche die Platten des Gehäuses miteinander verschrauben und gegeneinander, unter Einschluss des beweglichen Umschaltelements, vorspannen.

Eine bevorzugte Ausführungsform sieht nur drei Spannbolzen oder Spannschrauben vor, die ein Vorspanndreieck aufspannen, in welchem die durchfließbaren Ausnehmungen angeordnet sind.

Weiterhin vorzugsweise bildet einer der Spannbolzen oder Spannschrauben zugleich die Achse, um welche das Umschaltelement schwenkbar ist.

Der Umlenkkanal ist eine Ausnehmung, die sich von einer Segmentoberfläche in die Tiefe erstreckt, aber nicht zu einer vollständigen Durchbrechung der Segmentscheibe führt. Dabei können die Ränder senkrecht zur Oberfläche ausgebildet sein wie bei einer Nut oder auch gerundet oder abgeschrägt in Form einer Mulde. Der Umlenkkanal dient dazu, die Strömung auf einer Seite des Umschaltelements von einem Fließkanal in den anderen zu leiten, jedoch nicht durchzuleiten.

Um einen Betrieb ohne Unterbrechung des Hauptfließkanals bei der Umschaltung zu ermöglichen, ist erfindungsgemäss vorgesehen, dass die Größe, Form und Lage der radial innen liegenden Durchgangsöffnung und des Umlenkkanals auf dem Umschaltelement in Bezug auf die Größe und Position der Mündungsöffnung des Hauptfließkanals in der Ein- und /oder Auslaufplatte derart gewählt sind, dass beim Verschwenken des Umschaltelements die Mündungsöffnung ständig in Überschneidung mit der Durchgangsöffnung ist. Damit wird der Hauptfließkanal nicht abgesperrt, und es ist ein unterbrechungsfreier Betrieb möglich.

"Nicht abgesperrt" bzw. "unterbrechungsfrei" bedeutet im Zusammenhang mit der vorliegenden Erfindung insbesondere, dass der Fließkanalquerschnitt in keinem Betriebszustand der Mehrwegeventileinheit so stark eingeengt ist, dass in der Mehrwegeventileinheit mehr als 80% der Querschnittsfläche des jeweiligen Fließkanals durch das Umschaltelement überdeckt sind und/oder dass infolge der Querschnittsveränderung im Fließkanal während des Umschaltvorgangs ein starker Druckanstieg auftritt.

Für den unterbrechungsfreien Betrieb ist insbesondere zwischen der radial innen liegenden Durchgangsöffnung und des Umlenkkanals ein Brückensteg auf dem Umschaltelement ausgebildet, der schmaler ist als der Durchmesser der Mündungsöffnung des Hauptfließkanals.

Bei einer weiteren Ausführungsform sind ein unterbrechungsfreier Betrieb in zwei voneinander unabhängigen Kreisläufen wie auch eine Umschaltung dazwischen ohne Unterbrechung möglich. Dazu sind die Größe, Form und Lage der radial außen liegenden Durchgangsöffnung und dem Umlenkkanal auf dem Umschaltelement in Bezug auf die Größe und Position der Mündungsöffnung des Nebenfließkanals in der Ein- und /oder Auslaufplatte derart gewählt, dass beim Verschwenken des Umschaltelements die Mündungsöffnung ständig in Überschneidung entweder mit der Durchgangsöffnung oder mit dem Umlenkkanal oder mit beiden ist.

Weiterhin ist es möglich, den Durchmesser der äußeren Durchgangsöffnung deutlich größer zu wählen als den Durchmesser der inneren Durchgangsöffnung und auch die dazwischen vorgesehenen, einseitigen Nuten entsprechend zu formen. Dies bezieht sich insbesondere auf die tangentiale Ausdehnung der Durchgangsöffnungen bzw. deren Ausdehnung entlang des jeweiligen Teilkreisbogens.

Da die Öffnungsquerschnitte jeweils auf demselben Teilkreis liegen, reicht ein kleiner Schwenkwinkel des Umschaltelements aus, um die Umschaltung zu bewirken, wobei zugleich die Öffnungsquerschnitte auf dem inneren Teilkreis wie auch diejenigen auf dem äußeren Teilkreis überlappen.

Möglich ist es, kreisrunde Querschnitte für die Öffnungen auf dem inneren und auf dem äußeren Teilkreis vorzusehen. Dafür ist es erforderlich, das segmentförmige Umschaltelement länger auszubilden, so dass die Baugröße insgesamt steigt.

Besonders bevorzugt ist deshalb, dass die äußere Durchgangsöffnung und/oder ein äußerer Abschnitt des Umlenkkanals langlochförmig oder bogenförmig ausgebildet ist und sich entlang des äußeren Teilkreises erstreckt. Dabei ist aber die jeweilige radiale Ausdehnung der Öffnungen auf beiden Teilkreisen annähernd gleich. Auf diese Weise kann ebenfalls die ständige Überlappung der Querschnitte während der Umschaltung erreicht werden, wobei eine sehr kompakte Baugröße erreicht wird.

Bei einer bevorzugten Ausführungsform besitzen die Haupt- und Nebenfließkanäle in den Gehäuseplatten jeweils kreisrunde Querschnitte, da diese einfach zu fertigen sind. Möglich sind jedoch auch elliptische oder langlochförmige Querschnitte im Gehäuse.

Die Erfindung wird nachfolgend mit Bezug auf das in den Zeichnungen dargestellte Ausführungsbeispiel einer Mehrwegeventileinheit näher erläutert, die als 4/2-Wegeventil ausgebildet ist. Die Figuren zeigen im Einzelnen:
- Fig. 1: eine Mehrwegeventileinheit in perspektivischer Ansicht von schräg vorn;
- Fig. 2: die Mehrwegeventileinheit in perspektivischer Ansicht von schräg hinten;
- Fig. 3A - 3C: verschiedene Stellungen des Mehrwegeventils nach einer ersten Ausführungsform;
- Fig. 4: die Mehrwegeventileinheit in einer Ausgangsstellung in einer schematischen Querschnittsdarstellung;
- Fig. 5: die Mehrwegeventileinheit in einer Umschaltstellung in einer schematischen Querschnittsdarstellung;
- Fig. 6: eine Mehrwegeventileinheit nach einer zweiten Ausführungsform in einer schematischen Querschnittsdarstellung;
- Fig. 7A - 7C: verschiedene Stellungen des Mehrwegeventils nach einer dritten Ausführungsform, jeweils in Ansicht von vorn..

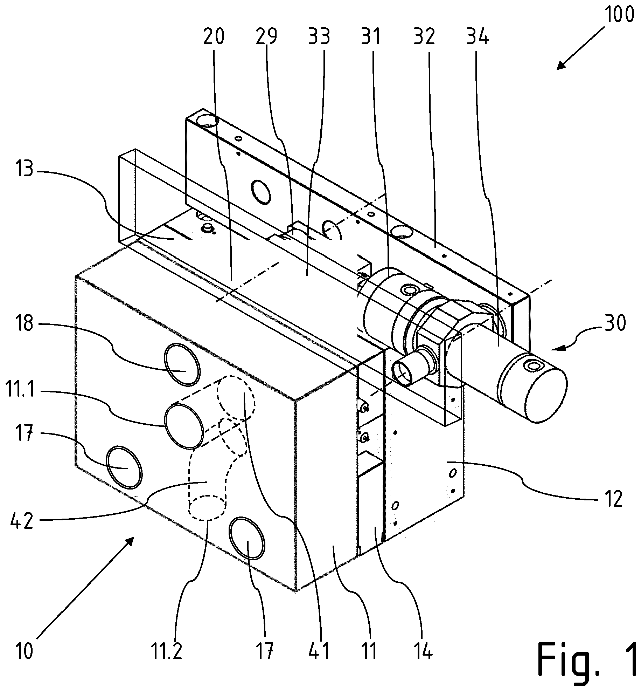

Figur 1 zeigt eine Mehrwegeventileinheit 100 in perspektivischer Ansicht von schräg vorn. Dieses umfasst ein Gehäuse 10, ein darin schwenkbar gelagertes Umschaltelement 20 und eine Antriebseinheit 30 für das Umschaltelement 20.

Das Gehäuse 10 besteht aus:
- einer Einlaufplatte 11 mit einem Hauptfließkanal 41, der an einer einlaufseitigen Mündungsöffnung 11.1 mündet, und einem Nebenfließkanal 42, der an einer Mündungsöffnung 11.2 mündet,
- mehreren Zwischenplatten 13, 14 und einem Distanzelement 15;
- einer Auslaufplatte 12, die ihrerseits Auslauf- und Mündungsöffnungen für den Haupt- und Nebenfließkanal enthält.

Die Platten 11, 12, 13, 14 und das Distanzelement 15 sind über drei Spannbolzen 17, 18, die sich quer durch das gesamte Plattenpaket erstrecken, miteinander verbunden und gegeneinander vorgespannt.

Die Antriebseinheit 30 ist auf der Oberseite des Gehäuses 10 angeordnet und umfasst zwei parallele Traversen 32, von denen eine vordere Traverse in Fig. 1 der Übersichtlichkeit halber transparent dargestellt ist. Ein Hydraulikzylinder 31 bildet den Antrieb. Der Hydraulikzylinder 31 ist an einer Achse 34 schwenkbar zwischen den Traversen 32 gelagert. Eine Kolbenstange des Hydraulikzylinders 31 ist über ein Gabelelement 33 mit einem Nocken 29 des Umschaltelements 20 verbunden.

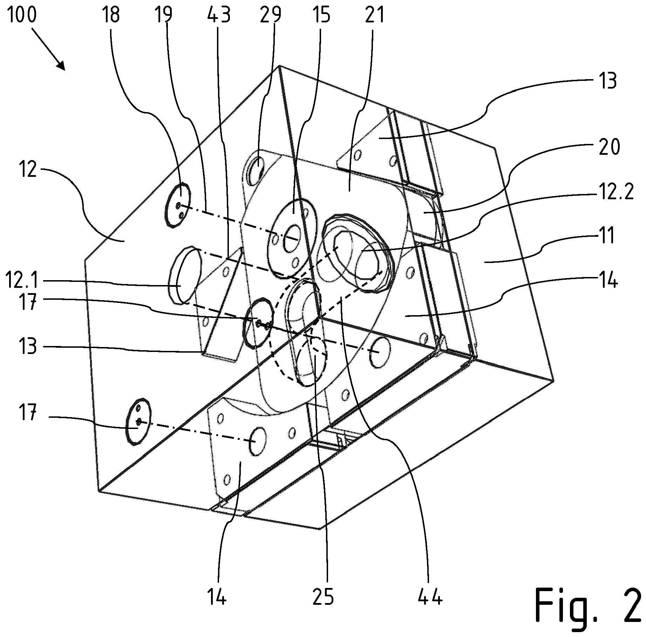

Figur 2 zeigt die Mehrwegeventileinheit 100 in einer perspektivischen Ansicht von der Rückseite und von schräg unten, also von der Auslaufseite her. Dabei ist die Auslaufplatte 12 transparent dargestellt, um die zwischen der Einlaufplatte 11 und der Auslaufplatte 12 angeordneten Elemente, nämlich die fest angeordneten Zwischenplatten 13, 14 und das schwenkbar angeordnete Umschaltelement 20, sichtbar werden zu lassen. Das Umschaltelement 20 ist mit einer Bohrung auf einem Distanzelement 15 gelagert; dazwischen ist ein Gleitlager ausgebildet. Außerdem sind die Anordnung und der Verlauf der drei Spannbolzen 17, 18 erkennbar, die sich quer durch das gesamte Plattenpaket der Platten 11, 12, 13, 14 einschließlich Distanzelement 15 erstrecken. Dabei bildet das Zentrum des oberen Spannbolzens 18 zugleich eine Schwenkachse 19, um welche das Umschaltelement 20 bewegbar ist.

Das Umschaltelement 20 ist kreissegmentförmig. Es ist auf einem überwiegenden Teil seiner zur Ein- bzw. Auslaufplatte 11, 12 gewandten Oberfläche als Dichtfläche 21 ausgebildet. Innerhalb der Dichtfläche 21 sind Ausnehmungen zur Durchleitung des Fluids angeordnet wie auch das als Lager dienende Distanzelement 15. Der Nocken 29 ragt oben aus dem Gehäuse 10 und ist mit dem Antrieb verbunden.

Der Hauptfließkanal 43 erstreckt sich quer durch die Auslaufplatte 12 hindurch bis zu einer auslaufseitigen Mündungsöffnung 12.1. Innerhalb der Auslaufplatte 12 verläuft außerdem ein gekrümmter Nebenfließkanal 44, der an einer auslaufseitigen Mündungsöffnung 12.2 mündet, welche an einer Seitenfläche der Auslaufplatte 12 angeordnet ist.

Die Zwischenplatten 13, 14 und das Distanzelement 15 haben die Aufgabe, die Einlaufplatte 11 und die Auslaufplatte 12 in einem konstanten, genau definierten Abstand zueinander anzuordnen. Außerdem können die Zwischenplatten 13, 14 als Festanschlag dienen, um die Bewegung des Umschaltelements 20 zu begrenzen.

Dabei müssen die Dicke der Zwischenplatten 13, 14 bzw. des Distanzelements 15 und die Dicke des Umschaltelements 20 so aufeinander abgestimmt sein, dass ein geringes Übermaß der Zwischenplatten 13, 14 und Distanzelement 15 besteht, so dass sich zwischen dem Umschaltelement 20 im Bereich seiner Dichtfläche 21 und den daran anliegenden Flächen der Ein- und Auslaufplatten 11, 12 ein minimaler Spalt ausbildet. Der Spalt ermöglicht die Bewegung des Umschaltelements 20 relativ zu den Ein- und Auslaufplatten 11, 12, ist aber andererseits so klein, dass ein mittel- bis hochviskoses Medium wie eine Kunststoffschmelze nur in einem sehr geringen Maß in den Spalt eindringen kann, ohne dabei aus dem Gehäuse 10 herauszufließen. Das in den Spalt eindringende Fluid wirkt dabei gleichsam als Schmiermittel für das bewegliche Umschaltelement 20. Die notwendige Dichtwirkung bei einer erfindungsgemäßen Mehrwegeventileinheit 100 wird also nur im Zusammenhang mit der Verwendung entsprechend mittel- bis hochviskoser Medien, insbesondere von Kunststoffschmelzen, erreicht. Für die Verteilung von Gasen und niedrig viskosen Fluiden wie Wasser ist die erfindungsgemäße Mehrwegeventileinheit 100 daher nicht geeignet.

Der innerhalb der Mehrwegeventileinheit 100 ausgebildete Hauptfließkanal erstreckt sich gradlinig von der einlaufseitigen Mündungsöffnung 11.1 (siehe Figur 1) durch eine entsprechende Durchgangsöffnung in dem Umschaltelement 20 und durch einen Hauptfließkanal 43 bis zu der auslaufseitigen Mündungsöffnung 12.1. Ein Nebenfließkanal 44 in der Auslaufplatte 12 erstreckt sich von der Kontaktebene mit dem Umschaltelement 20 im Inneren bis zu einer seitlichen Mündungsöffnung 12.2.

Auf der zur Auslaufplatte 12 gewandten Dichtfläche 21 des Umschaltelements 20 ist eine Vertiefung als Umlenkkanal 25 eingebracht, über den eine Fließverbindung zwischen dem Hauptfließkanal 43 und dem Nebenfließkanal 44 herstellbar ist.

Die Anordnung der Mündungsöffnungen 11.2, 12.2 der Nebenfließkanäle 42, 44 an einer der Seitenflächen der jeweiligen Ein- bzw. Auslaufplatte 11, 12 hat den Vorteil, dass die Mehrwegeventileinheit 100 über den sich an den beiden Stirnseiten öffnenden Hauptfließkanal 41, 43 direkt in eine Produktionslinie eingefügt und mit vorgeschalteten bzw. nachgeschalteten Produktionsmitteln verbunden werden kann, wobei die Verbindungen zu den Nebenfließkanälen 42, 44 nicht hinderlich sind.

Das Ausführungsbeispiel der Mehrwegeventileinheit 100 umfasst somit vier Anschlüsse an den Mündungsöffnungen 11.1, 11.2, 12.1, 12.2 und sieht zwei unterschiedliche Schaltstellungen des Umschaltelements vor, so dass es sich um ein 4/2-Wegeventil handelt.

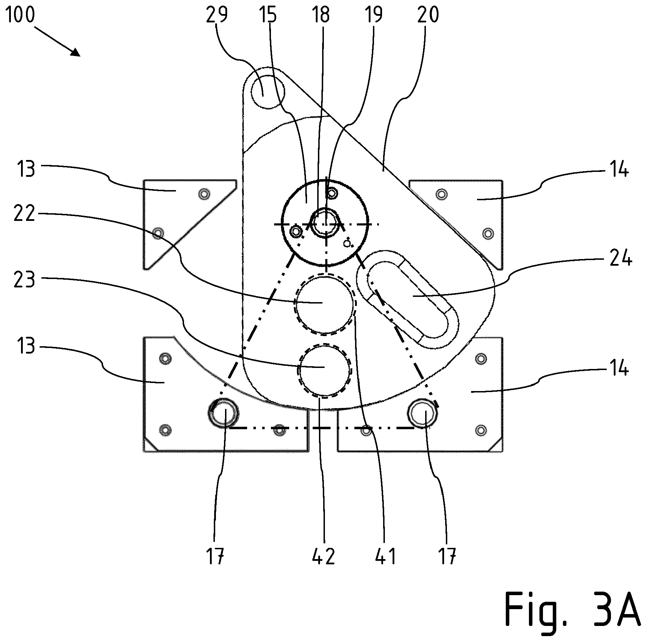

In den Figuren 3A bis 3C sind verschiedene Stellungen des Mehrwegeventils 100 beim Umschalten gezeigt, wozu jeweils nur die zwischen den Ein- und Auslaufplatten 11, 12 angeordneten Elemente dargestellt sind, und zwar mit Blick auf die zur Einlaufplatte weisende Vorderseite des Umschaltelements 20.

Das Umschaltelement 20 ist an der Schwenkachse 19 schwenkbar gelagert, die durch das ringförmige Distanzelement 15 gebildet ist. Der Außenumfang dient als Gleitlagerfläche und der Innenumfang zur Aufnahme des Spannbolzens 18. Die gestrichelten Kreise zeigen die Lage des Hauptfließkanals 41 und des Nebenfließkanals 42 an. Das Umschaltelement 20 besitzt zwei Durchgangsöffnungen 22, 23, die als runde Bohrungen ausgebildet sind und sich vollständig durch das Umschaltelement 20 hindurch erstrecken. Eine weitere Ausnehmung ist in Form einer Nut 24 gebildet, die sich auf der zur Einlaufplatte weisenden Vorderseite des Umschaltelements 20 befindet.

Die in Figur 3A gezeigte Stellung des Umschaltelements 20 entspricht einer Ausgangsstellung der Mehrwegeventileinheit 100, bei der die jeweiligen Hauptfließkanäle 41, 43 in Ein- und Auslaufplatte 11, 12 über die Durchgangsöffnung 22 im Umschaltelement 20 verbunden sind, und zugleich die jeweiligen Nebenfließkanäle 42, 44 über die Durchgangsöffnung 23 verbunden sind. Hierbei wird auch sichtbar, dass durch die Spannbolzen 17, 18 ein Dreieck aufgespannt ist, innerhalb dessen die durch Haupt- und Nebenfließkanal 41, 42 gebildeten Strömungswege liegen. Dies dient der Erhöhung der Dichtigkeit, da die Spaltweite zwischen den Ein- und Auslaufplatten 11, 12 des Gehäuses 10 und dem Umschaltelement 20 reguliert werden kann, indem der Druckbeaufschlagung durch das fließende Fluid mit einer entsprechenden Vorspannung an den Spannbolzen 17, 18 begegnet werden kann und dadurch eine zu starke Aufweitung verhindert werden kann.

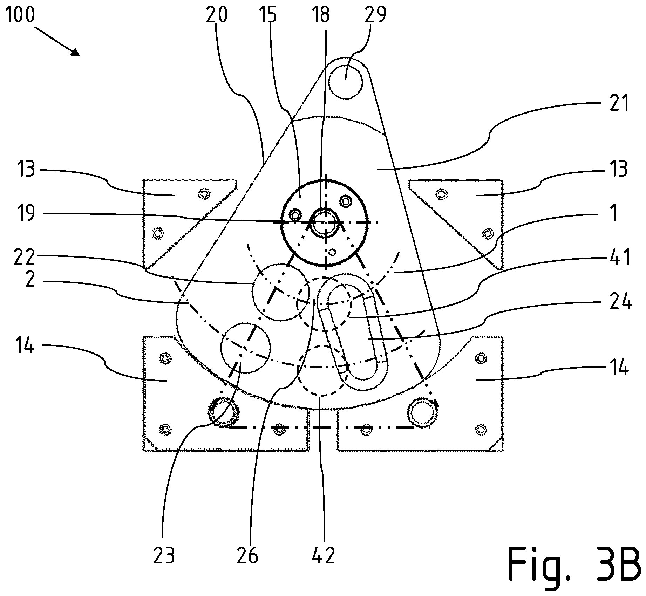

Figur 3B zeigt eine Zwischenstellung beim Umschalten. Das Umschaltelement ist gegenüber Figur 3A um etwa 30° im Uhrzeigersinn verschwenkt worden

Um in dem Hauptfließkanal 41 einen unterbrechungsfreien Betrieb auch während des Umschaltens zu ermöglichen, ist dieser radial näher am Schwenklagers des Umschaltelements 20 bzw. der Schwenkachse 19 angeordnet als der Nebenfließkanal 42. Außerdem ist ein Brückensteg 26 ausgebildet, der sich zwischen der Bohrung 22 für den Hauptfließkanal 41 und des Umlenkkanals 24 befindet. Auf einer Teilkreislinie 1 um die Schwenkachse 19, die durch den Mittelpunkt der Bohrung 22 und einen radial innen gelegenen Bereich des Umlenkkanals 24 führt, ist der Brückensteg 26 schmaler als der Durchmesser der Bohrung 22 und der vorzugsweise genauso großen Querschnittsöffnung des Hauptfließkanals 41.

In der Zwischenstellung nach Figur 3B ist der Hauptfließkanal 41 sowohl in Überschneidung mit der Bohrung 22 des Umschaltelements 20 wie auch mit dem radial inneren Bereich des Umlenkkanals 24. Hierdurch kann das Fluid noch teilweise durch den Hauptfließkanal 41, 43 weiter fließen, während über den Umlenkkanal 24 schon eine Verbindung zu dem Nebenfließkanal 42 besteht.

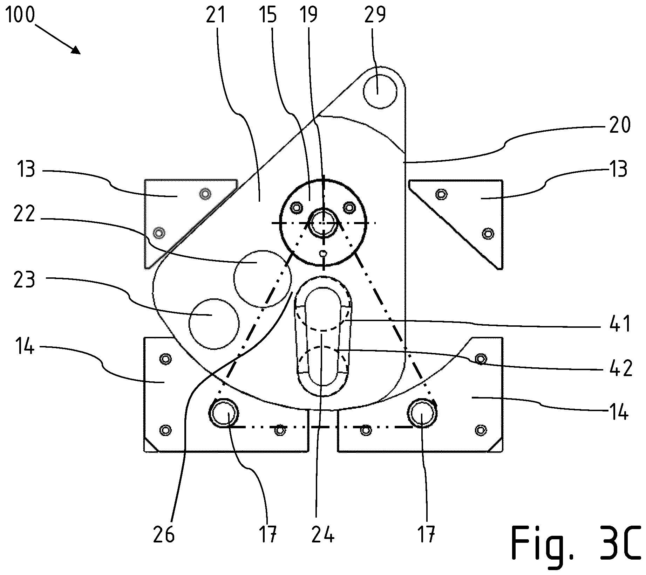

In Figur 3C ist die Umschaltstellung gezeigt, in der das Umschaltelement 20 die Hauptfließkanäle 41, 43 wie auch die Nebenfließkanäle 42, 44 auf den Ein- und Auslauplatten 11, 12 voneinander trennt. Stattdessen wird über den Umlenkkanal 24 eine Verbindung des Hauptfließkanals 41 mit dem Nebenfließkanal 42 auf der Einlaufplatte 11 hergestellt. Das gleiche geschieht auf der abgewandten Seite des Umschaltelements 20 bei der Auslaufplatte.

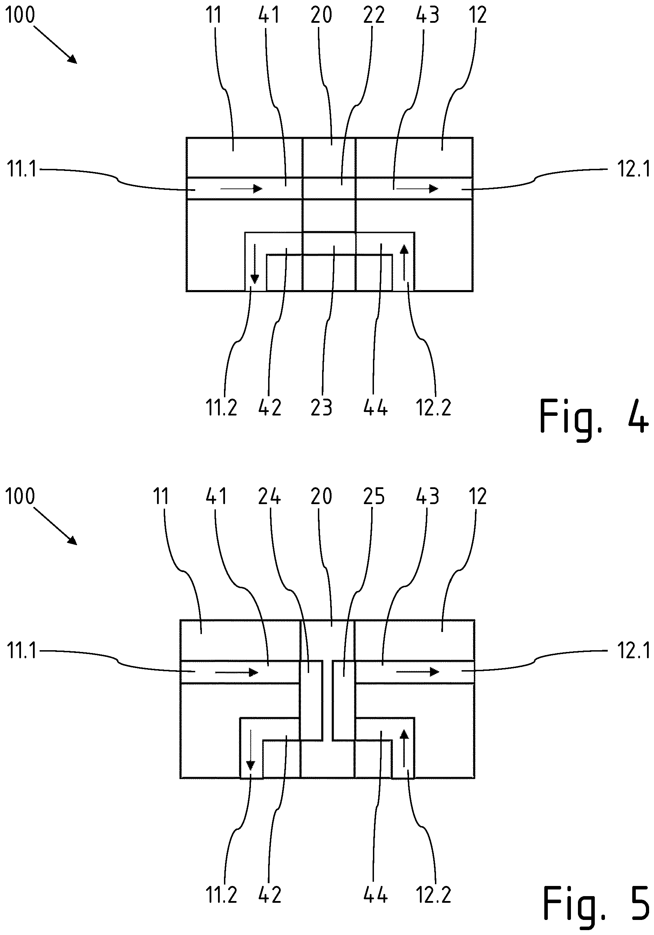

Die beiden möglichen Schaltstellungen der Mehrwegeventileinheit 100 sind in den Figuren 4 und 5 jeweils in einer schematischen, seitlichen Schnittdarstellung gezeigt. Die Pfeile darin zeigen jeweils mögliche Strömungsrichtungen an.

In Figur 4 besteht eine zu der Stellung des Umschaltelements 20 nach Figur 3A entsprechende Fließwegkonfiguration, die der Ausgangsstellung im Normalbetrieb der Mehrwegeventileinheit 100 entspricht. Das Fluid tritt durch die einlaufseitigen Mündungsöffnung 11.1 in den Hauptfließkanal 41 auf der Einlaufplatte 11 ein, läuft durch die Durchgangsöffnung 22 im Umschaltelement 20 in den Hauptfließkanal 43 auf der Auslaufplatte 12 und tritt an der auslaufseitigen Mündungsöffnung 12.1 wieder aus. Gleichzeitig besteht eine gegensätzlich gerichtete Fließverbindung von der Mündungsöffnung 12.2 an der Auslaufplatte 12.2 in den Nebenfließkanal 44, durch die Durchgangsöffnung 23 in den Nebenfließkanal 42 in der Einlaufplatte 11 und aus der Mündungsöffnung 11.2 heraus.

In Figur 5 befindet sich die Mehrwegeventileinheit 100 in der Umschaltstellung. Zwischen den Fließkanälen 41, 42 in der Einlaufplatte 11 sowie zwischen den Fließkanälen 43, 44 in der Auslaufplatte 12 besteht nun jeweils eine Verbindung durch je einen Umlenkkanal 24, 25 auf dem Umschaltelement 20. Eine Umkehrung der Strömungsrichtungen aufgrund der Umschaltung findet bei der Konfiguration nach den Figuren 4 und 5 nicht statt.

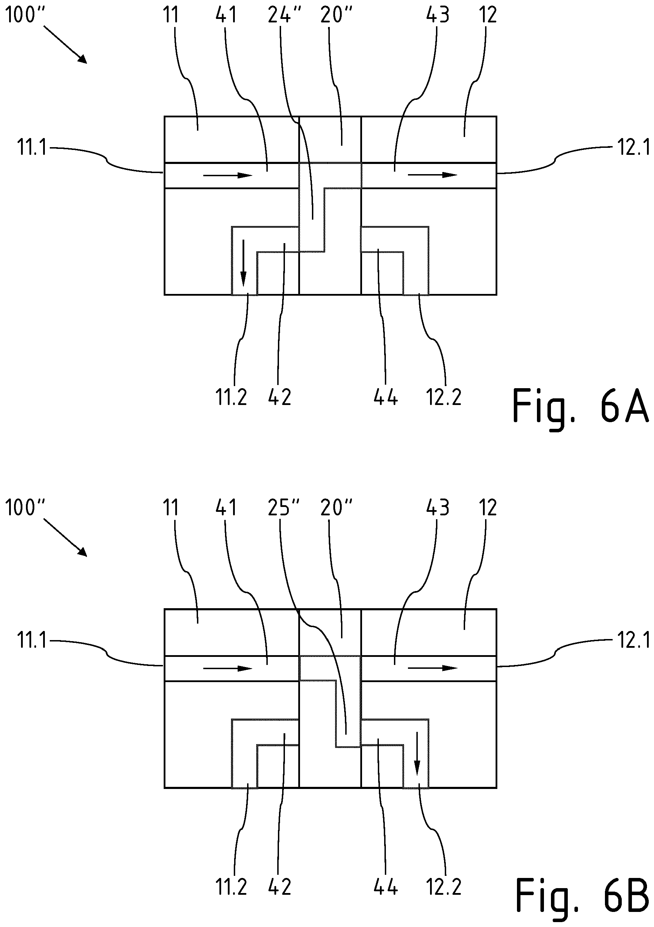

Die Figuren 6A und 6B zeigen jeweils schematisch den Schnitt durch eine weitere Ausführungsform einer Mehrwegeventileinheit 100" in einer Umschaltstellung. Die nicht gezeigte Ausgangsstellung der Mehrwegeventileinheit 100" ist analog zur Darstellung nach Figur 4, das heißt, zwischen den Fließkanälen 41, 42 in der Einlaufplatte 11 sowie zwischen den Fließkanälen 43, 44 in der Auslaufplatte 12 besteht in der Ausgangsstellung jeweils eine Verbindung durch je eine der Durchgangsöffnungen auf dem Umschaltelement 20". Es gibt also einen durchgängigen Hauptfließkanal und einen durchgängigen Nebenfließkanal.

Mit der Umschaltung bleibt der Hauptfließkanal geöffnet; es wird aber eine zusätzliche Fließverbindung zwischen dem Hauptfließkanal und einem Abschnitt des Nebenfließkanals hergestellt. Dazu sieht das Umschaltelement 20" auf einer Seite einen Umlenkkanal 24" vor, der eine Nut umfasst, die sich radial auf einer Seite des Umschaltelements 20" erstreckt und in einer Durchgangsöffnung mündet, so dass sich im Querschnitt die L-förmige Konfiguration ergibt. Der Nebenfließkanal 44 wird abgesperrt und der Nebenfließkanal 42 wird mit beibehaltener Fließrichtung aus dem Hauptfließkanal 41, 43 gespeist.

Bei dieser Ausführungsform kann an einer dritten Winkelposition ein weiterer Umlenkkanal 25" auf dem segmentförmigen Umschaltelement 20" vorgesehen sein. Der Umlenkkanal 25" setzt sich auch aus einer Durchgangsöffnung und einer einseitigen Nut auf der anderen Seite des Umschaltelements 20" zusammen, so dass der Nebenfließkanal 44 in der Ausgangsplatte 12 an den Hauptfließkanal 43 angebunden werden kann. Dabei dreht sich die Strömungsrichtung um, so dass diese Stellung zum Beispiel für eine Rückspülung des Nebenfließkanals geeignet ist.

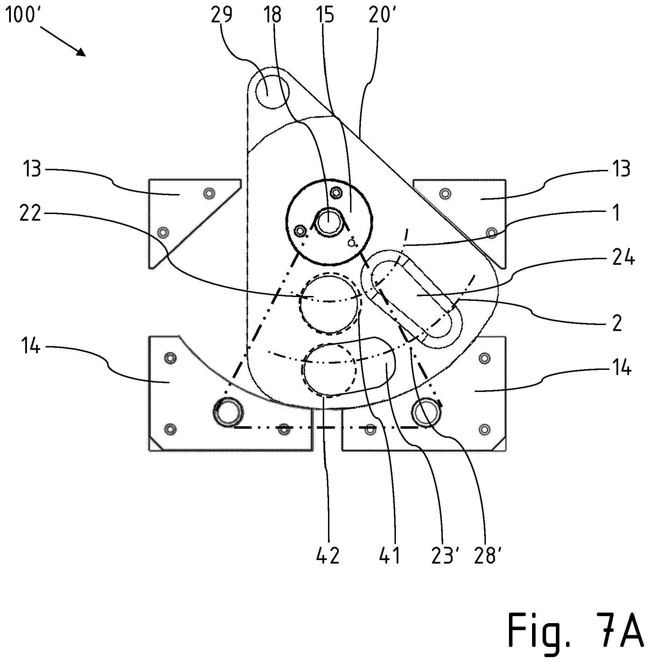

Die Figuren 7A bis 7C zeigen jeweils in einer zu den Figuren 3A bis 3C analogen Stellung einer Mehrwegeventileinheit 100` mit einer weiteren Ausführungsform eines Umschaltelements 20'. Dessen Segmentform, die Lagerung an dem Spannbolzen 18, wie auch Position und Größe der Durchgangsöffnung 22 sind identisch zur ersten Ausführungsform. Unterschiedlich ist die Form einer radial außerhalb der Durchgangsöffnung 22 gelegenen Ausnehmung 23`, die hier als Langloch oder als bogenförmige Ausnehmung ausgebildet ist. Es handelt sich ebenfalls um eine Durchgangsöffnung in dem Umschaltelement 20'.

In einer Ausgangsstellung nach Figur 7A ist sind die beiden Hauptfließkanäle 41, 43 der Einlaufpatte 11 und der Auslaufpatte 12 durch die Durchgangsöffnung 22 miteinander verbunden. Durch die Ausnehmung 23' sind zugleich die Nebenfließkanäle 42, 44 in der Einlaufpatte 11 und der Auslaufpatte 12 miteinander verbunden. Der Anteil des Querschnittsbereichs der Ausnehmung 23`, der nicht direkt in Flucht mit den Nebenfließkanälen 42, 44 liegt, ist ebenfalls druckbeaufschlagt. Er befindet sich noch innerhalb des durch die Spannbolzen 17, 18 vorgespannten Bereichs.

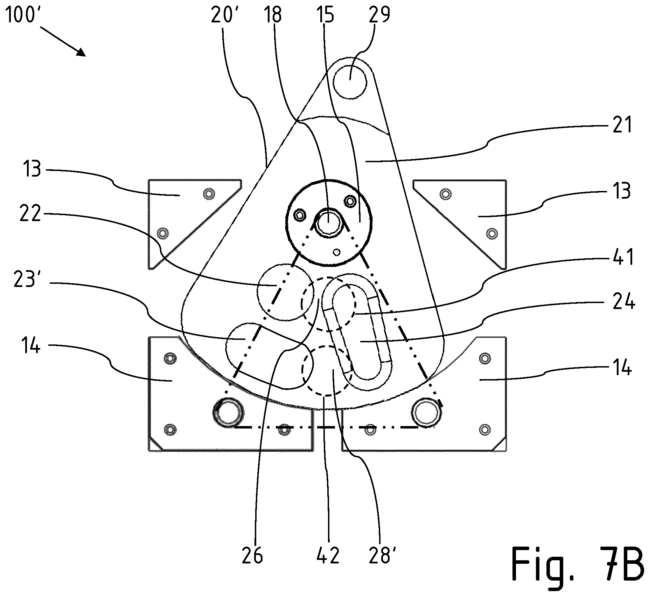

In Figur 7B ist analog zu Figur 3B eine Zwischenstellung zwischen den beiden Betriebszuständen der erfindungsgemäßen Mehrwegeventileinheit 100 gezeigt. Hierbei wird sichtbar, dass auf der in radialer Richtung näher zur Achse 21 gelegenen Seite die Durchgangsöffnung 22 und der Umlenkkanal 24 über die Mündungsöffnung 11.3 miteinander verbunden sind. Zugleich besteht in dieser Zwischenstellung auch eine Fließverbindung zwischen dem äußeren Bereich des Umlenkkanals 24, dem Nebenfließkanal 42 und der langlochartigen Ausnehmung 23`. Durch das modifizierte Umschaltelement 20' kann bei dieser Ausführungsform der Mehrwegeventileinheit 100' ein kontinuierlicher Betrieb in allen Fließkanälen erreicht werden, das heißt weder der Hauptfließkanal 41, 43, noch der Nebenfließkanal 42, 44 ist während des Umschaltvorgangs vollkommen abgesperrt.

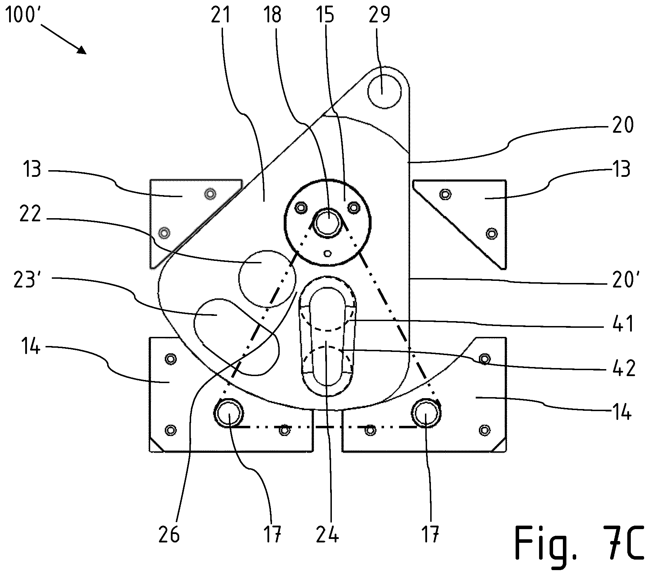

In Figur 7C ist wieder die Umschaltstellung erreicht, in der die Fließkanäle 41, 42 innerhalb der Einlaufpatte 11 und die Fließkanäle 43, 44 innerhalb der Auslaufpatte 12 paarweise über die Umlenkkanäle 24, 25 miteinander verbunden sind.

### Bezugszeichen-.

- 100;100'; 100": Mehrwegeventileinheit

- 1,2: Teilkreise

- 10: Gehäuse
- 11: Einlaufplatte
- 11.1, 11.2, 11.3: Mündungsöffnungen
- 12: Auslaufplatte
- 12.1, 12.2: Mündungsöffnungen
- 13,14, 15: Zwischenplatte
- 17,18: Spannelemente
- 19: Schwenkachse

- 20;20';20": Umschaltelement
- 21: Dichtfläche
- 22,23;23';22": Durchgangsöffnung
- 24,25;24",25": Umlenkkanal
- 26: Brückensteg
- 29: Nocken

- 30: Antriebseinheit
- 31: Hydraulikzylinder
- 32: Traversen
- 33: Gabelelement
- 34: Achse

- 41, 43: Hauptfließkanal
- 42,44: Nebenfließkanal

## Patentansprüche

1. Mehrwegeventileinheit (100; 100'; 100") für Kunststoffschmelzen und andere mittel- bis hochviskose Fluide, die ein Gehäuse (10) aufweist, das wenigstens umfasst:
- eine Einlaufplatte (11) mit wenigstens einem Hauptfließkanal (41);
- eine Auslaufplatte (12) mit wenigstens einem Hauptfließkanal (43) und
- wenigstens einen Nebenfließkanal (42; 44);
wobei zwischen der Einlaufplatte (11) und der Auslaufplatte (12) wenigstens eine Zwischenplatte (13, 14) und/oder wenigstens ein Distanzelement (15) angeordnet sind,
und die wenigstens ein schwenk- oder drehbar im Gehäuse (10) gelagertes Umschaltelement (20; 20'; 20") aufweist, welches:
- zwischen der Einlaufplatte (11) und der Auslaufplatte (12) angeordnet ist,
- in einer Ausgangsstellung die Hauptfließkanäle (41, 43) über wenigstens eine Durchgangsöffnung (22, 23; 23'; 22") miteinander verbindet und
- in wenigstens einer Umschaltstellung über wenigstens einen, sich nur zu einer Seite des Umschaltelements (20; 20'; 20") öffnenden Umlenkkanal (24, 25; 24",25") jeweils wenigstens einen der Hauptfließkanäle (41, 43) mit dem wenigstens einen Nebenfließkanal (42, 44) verbindet,
**dadurch gekennzeichnet,**
- **dass** das Umschaltelement (20; 20'; 20") segmentförmig ausgebildet ist und benachbart zu der Zwischenplatte (13, 14) und/oder dem wenigstens einen Distanzelement (15) angeordnet sind,
- **dass** die in der Einlaufplatte (11) und/oder in der Auslaufplatte (12) vorhandenen und zu dem Umschaltelement (20; 20'; 20") gewandten Mündungsöffnungen der Hauptfließkanäle (41, 43) und eine Mündungsöffnung des wenigstens einen Nebenfließkanals (42, 44) in Bezug auf eine Schwenkachse (19) des Umschaltelements (20; 20'; 20") auf unterschiedlichen Teilkreisen (1, 2) angeordnet sind, und
- **dass** sich der Umlenkkanal (24, 25; 24",25") auf dem Umschaltelement (20; 20'; 20") zwischen den Teilkreisen (1, 2) erstreckt, wobei die Größe, Form und Lage der radial innen liegenden Durchgangsöffnung (22) und des Umlenkkanals (24, 25; 24",25") auf dem Umschaltelement (20; 20'; 20") in Bezug auf die Größe und Position der Mündungsöffnung des Hauptfließkanals (41, 43) in der Ein- und/oder Auslaufplatte (11, 12) derart gewählt sind, dass beim Verschwenken des Umschaltelements (20; 20'; 20") die Mündungsöffnung ständig in Überschneidung entweder mit der Durchgangsöffnung (22) oder mit dem Umlenkkanal (24, 25; 24", 25") oder mit beiden ist.

2. Mehrwegeventileinheit (100; 100'; 100") nach Anspruch 1, **dadurch gekennzeichnet, dass** die Einlaufplatte (12) und die Auslaufplatte (12) jeweils einen Hauptfließkanal (41, 43) und einen Nebenfließkanal (42, 44) aufweisen.

3. Mehrwegeventileinheit (100; 100'; 100") nach Anspruch 2, **dadurch gekennzeichnet, dass** das Umschaltelement (20; 20'; 20") auf beiden Seiten jeweils einen Umlenkkanal (24, 25; 24",25") aufweist.

4. Mehrwegeventileinheit (100; 100'; 100") nach Anspruch 2 oder 3,
**dadurch gekennzeichnet, dass** das Umschaltelement (20; 20'; 20") auf beiden Teilkreisen (1, 2) jeweils eine Durchgangsöffnung (22, 23; 22") aufweist.

5. Mehrwegeventileinheit (100") nach einem der Ansprüche 1 bis 4, **dadurch gekennzeichnet, dass** das Umschaltelement (20") zur Herstellung einer Fließverbindung zwischen dem geöffneten Hauptfließkanal und wenigstens einem Abschnitt des Nebenfließkanals (42, 44) wenigstens einen Umlenkkanal (24", 25") aufweist, der sich zwischen den Teilkreisen (1, 2) erstreckt und der sich an eine der Durchgangsöffnungen (22, 23; 23'; 22") anschließt.

6. Mehrwegeventileinheit (100; 100'; 100") nach einem der vorhergehenden Ansprüche, **dadurch gekennzeichnet, dass** die Mündungsöffnungen der Hauptfließkanäle (41, 43) an dem Umschaltelement (20; 20'; 20") und die zugehörige Durchgangsöffnung (22) auf dem Umschaltelement (20; 20'; 20") näher bei der Schwenkachse (19) angeordnet sind als die Mündungsöffnung des wenigstens einen Nebenfließkanals (42, 44).

7. Mehrwegeventileinheit (100; 100'; 100") nach einem der vorhergehenden Ansprüche, **dadurch gekennzeichnet, dass** zwischen wenigstens einer Durchgangsöffnung (22, 23) und dem Umlenkkanal (24, 25; 24",25") wenigstens ein Brückensteg (26) auf dem Umschaltelement (20; 20'; 20") ausgebildet ist, der schmaler ist als der Durchmesser der Mündungsöffnung des Hauptfließkanals (41, 43).

8. Mehrwegeventileinheit (100; 100'; 100") nach einem der Ansprüche 4 bis 7, **dadurch gekennzeichnet, dass** die Durchgangsöffnungen (22, 23) auf derselben Radiuslinie liegen und dass die Umlenkkanäle (24, 25; 24",25") mit ihrer Längserstreckung radial zwischen den Teilkreisen (1, 2) ausgerichtet sind.

9. Mehrwegeventileinheit (100; 100'; 100") nach einem der Ansprüche 4 bis 8, **dadurch gekennzeichnet, dass** die tangentiale Erstreckung der auf dem äußeren Teilkreis (2) liegenden Durchgangsöffnung (23) größer ist als die tangentiale Erstreckung der innen liegenden Durchgangsöffnung (22).

10. Mehrwegeventileinheit (100') nach Anspruch 9, **dadurch gekennzeichnet, dass** die äußere Durchgangsöffnung (23') langlochförmig oder bogenförmig ausgebildet ist und sich entlang des äußeren Teilkreises (2) erstreckt.

11. Mehrwegeventileinheit (100; 100'; 100") nach einem der vorhergehenden Ansprüche, **dadurch gekennzeichnet, dass** die jeweiligen Mündungen des Hauptfließkanals (41) und des Nebenfließkanals (42) in der Einlaufplatte (11) am Übergang zum Umschaltelement (20; 20'; 20") bzw. in der Auslaufplatte (12) am Übergang vom Umschaltelement (20; 20'; 20") innerhalb eines Polygons angeordnet sind, das durch mehrere, sich durch die aneinander liegenden Platten (11, 12, 13, 14) und ggf. durch das Distanzelement (15) erstreckende Spannelemente (17, 18) aufgespannt ist.

12. Mehrwegeventileinheit (100; 100'; 100") nach Anspruch 11, **dadurch gekennzeichnet, dass** drei Spannelemente (17, 18) vorgesehen sind, die ein Dreieck aufspannen.

13. Mehrwegeventileinheit (100; 100'; 100") nach einem der vorhergehenden Ansprüche, **dadurch gekennzeichnet, dass** der Umlenkkanal (24, 25; 24", 25") durch wenigstens eine, auf einer Seite des Umschaltelements (20; 20'; 20") eingebrachte Nut oder Mulde gebildet ist.

## Claims

1. Multiport valve unit (100; 100'; 100") for plastic melts and other medium to high-viscosity fluids, which has a housing (10) at least comprising:
- an inlet plate (11) having at least one primary flow duct (41);
- an outlet plate (12) having at least one primary flow duct (43); and
- at least one secondary flow duct (42; 44);
wherein disposed between the inlet plate (11) and the outlet plate (12) are at least one intermediate plate (13, 14) and/or at least one spacer element (15),
and which multiport valve unit (100; 100'; 100") has at least one switchover element (20; 20'; 20") which is pivotably or rotatably mounted in the housing (10) and which:
- is disposed between the inlet plate (11) and the outlet plate (12);
- in an initial position interconnects the primary flow ducts (41, 43) by way of at least one passage opening (22, 23; 23', 22"); and
- in at least one switchover position connects in each case at least one of the primary flow ducts (41, 43) to the at least one secondary flow duct (42, 44) by way of at least one redirection duct (24, 25; 24", 25") which only opens towards one side of the switchover element (20; 20', 20"),
**characterized**
- **in that** the switchover element (20; 20'; 20") is configured in the shape of a segment and disposed adjacent to the intermediate plate (13, 14) and/or the at least one spacer element (15);
- **in that** the mouth openings of the primary flow ducts (41, 43) which are present in the inlet plate (11) and/or in the outlet plate (12) and face the switchover element (20; 20'; 20"), and a mouth opening of the at least one secondary flow duct (42, 44), are disposed on different pitch circles (1, 2) in terms of a pivot axis (19) of the switchover element (20; 20'; 20"); and
- **in that** the redirection duct (24, 25; 24", 25") on the switchover element (20; 20', 20") extends between the pitch circles (1, 2), wherein the size, shape and position of the radially inward passage opening (22) and of the redirection duct (24, 25; 24", 25") on the switchover element (20; 20'; 20") in terms of the size and position of the mouth opening of the primary flow duct (41, 43) in the inlet plate (11) and/or outlet plate (12) are chosen in such a manner that, when pivoting the switchover element (20; 20', 20"), the mouth opening always overlaps either the passage opening (22) or the redirection duct (24, 25; 24", 25") or both.

2. Multiport valve unit (100; 100'; 100") according to Claim 1, **characterized in that** the inlet plate (12) and the outlet plate (12) have in each case one primary flow duct (41, 43) and one secondary flow duct (42, 44).

3. Multiport valve unit (100; 100'; 100") according to Claim 2, **characterized in that** the switchover element (20; 20', 20") has in each case one redirection duct (24, 25; 24", 25") on both sides.

4. Multiport valve unit (100; 100'; 100") according to Claim 2 or 3, **characterized in that** the switchover element (20; 20'; 20") has in each case one passage opening (22, 23; 22") on both pitch circles (1, 2).

5. Multiport valve unit (100") according to one of Claims 1 to 4, **characterized in that** the switchover element (20") for establishing a fluidic connection between the opened primary flow duct and at least one portion of the secondary flow duct (42, 44) has at least one redirection duct (24", 25") which extends between the pitch circles (1, 2) and adjoins one of the passage openings (22, 23; 23'; 22").

6. Multiport valve unit (100; 100'; 100") according to one of the preceding claims, **characterized in that** the mouth openings of the primary flow ducts (41, 43) on the switchover element (20; 20'; 20"), and the associated passage opening (22) on the switchover element (20; 20'; 20") are disposed closer to the pivot axis (19) than the mouth opening of the at least one secondary flow duct (42, 44).

7. Multiport valve unit (100; 100'; 100") according to one of the preceding claims, **characterized in that** configured on the switchover element (20; 20'; 20"), between at least one passage opening (22, 23) and the redirection duct (24, 25; 24", 25"), is at least one bridge web (26) which is narrower than the diameter of the mouth opening of the primary flow duct (41, 43).

8. Multiport valve unit (100; 100'; 100") according to one of Claims 4 to 7, **characterized in that** the passage openings (22, 23) lie on the same radius line, and **in that** the redirection ducts (24, 25; 24", 25") by way of their longitudinal extent are aligned radially between the pitch circles (1, 2).

9. Multiport valve unit (100; 100'; 100") according to one of Claims 4 to 8, **characterized in that** the tangential extent of the passage opening (23) lying on the outer pitch circle (2) is larger than the tangential extent of the inner passage opening (22).

10. Multiport valve unit (100') according to Claim 9, **characterized in that** the outer passage opening (23') is configured in the shape of a slot or arc and extends along the outer pitch circle (2).

11. Multiport valve unit (100; 100'; 100") according to one of the preceding claims, **characterized in that** the respective mouths of the primary flow duct (41) and of the secondary flow duct (42) in the inlet plate (11) at the transition to the switchover element (20; 20'; 20"), or in the outlet plate (12) at the transition from the switchover element (20; 20'; 20"), respectively, are disposed within a polygon which is defined by a plurality of tensioning elements (17, 18) which extend through the plates (11, 12, 13, 14) lying against one another, and optionally through the spacer element (15) .

12. Multiport valve unit (100; 100'; 100") according to Claim 11, **characterized in that** three tensioning elements (17, 18) which define a triangle are provided.

13. Multiport valve unit (100; 100'; 100") according to one of the preceding claims, **characterized in that** the redirection duct (24, 25; 24", 25") is formed by at least one groove or recess incorporated on one side of the switchover element (20; 20'; 20").

## Revendications

1. Unité de vanne multivoies (100 ; 100' ; 100'') pour matières plastiques fondues et autres fluides de viscosité moyenne à élevée, qui présente un boîtier (10) qui comprend au moins :
- une plaque d'entrée (11) avec au moins un canal d'écoulement principal (41) ;
- une plaque de sortie (12) avec au moins un canal d'écoulement principal (43) et
- au moins un canal d'écoulement secondaire (42 ; 44) ;
au moins une plaque intermédiaire (13, 14) et/ou au moins un élément d'écartement (15) étant agencés entre la plaque d'entrée (11) et la plaque de sortie (12),
et qui présente au moins un élément de commutation (20 ; 20' ; 20'') monté de manière pivotante ou rotative dans le boîtier (10), lequel :
- est agencé entre la plaque d'entrée (11) et la plaque de sortie (12),
- dans une position initiale, relie entre eux les canaux d'écoulement principaux (41, 43) par l'intermédiaire d'au moins une ouverture de passage (22, 23 ; 23' ; 22") et
- dans au moins une position de commutation, par l'intermédiaire d'au moins un canal de déviation (24, 25 ; 24", 25") s'ouvrant seulement vers un côté de l'élément de commutation (20 ; 20' ; 20"), relie respectivement au moins l'un des canaux d'écoulement principaux (41, 43) à l'au moins un canal d'écoulement secondaire (42, 44),
**caractérisée en ce que**
- l'élément de commutation (20 ; 20' ; 20") est réalisé en forme de segment et est agencé au voisinage de la plaque intermédiaire (13, 14) et/ou de l'au moins un élément d'écartement (15),
- les ouvertures d'embouchure des canaux d'écoulement principaux (41, 43) présentes dans la plaque d'entrée (11) et/ou dans la plaque de sortie (12) et tournées vers l'élément de commutation (20 ; 20' ; 20'') et une ouverture d'embouchure de l'au moins un canal d'écoulement secondaire (42, 44) sont agencées sur des cercles partiels (1, 2) différents par rapport à un axe de pivotement (19) de l'élément de commutation (20 ; 20' ; 20"), et
- le canal de déviation (24, 25 ; 24", 25") s'étend sur l'élément de commutation (20 ; 20' ; 20") entre les cercles partiels (1, 2),
la taille, la forme et la position de l'ouverture de passage (22) située radialement à l'intérieur et du canal de déviation (24, 25 ; 24", 25") sur l'élément de commutation (20 ; 20' ; 20") étant choisies par rapport à la taille et à la position de l'ouverture d'embouchure du canal d'écoulement principal (41, 43) dans la plaque d'entrée et/ou de sortie (11, 12) de telle sorte que lors du pivotement de l'élément de commutation (20 ; 20' ; 20"), l'ouverture d'embouchure est toujours en intersection soit avec l'ouverture de passage (22), soit avec le canal de déviation (24, 25 ; 24", 25"), soit avec les deux.

2. Unité de vanne multivoies (100 ; 100' ; 100") selon la revendication 1, **caractérisée en ce que** la plaque d'entrée (12) et la plaque de sortie (12) présentent chacune un canal d'écoulement principal (41, 43) et un canal d'écoulement secondaire (42, 44).

3. Unité de vanne multivoies (100 ; 100' ; 100'') selon la revendication 2, **caractérisée en ce que** l'élément de commutation (20 ; 20' ; 20'') présente respectivement un canal de déviation (24, 25 ; 24'', 25'') sur les deux côtés.

4. Unité de vanne multivoies (100 ; 100' ; 100'') selon la revendication 2 ou 3, **caractérisée en ce que** l'élément de commutation (20 ; 20' ; 20'') présente respectivement une ouverture de passage (22, 23 ; 22'')sur les deux cercles partiels (1, 2).

5. Unité de vanne multivoies (100'') selon l'une quelconque des revendications 1 à 4, **caractérisée en ce que** l'élément de commutation (20'') présente, pour établir une liaison d'écoulement entre le canal d'écoulement principal ouvert et au moins une section du canal d'écoulement secondaire (42, 44), au moins un canal de déviation (24'', 25'') qui s'étend entre les cercles partiels (1, 2) et qui se raccorde à l'une des ouvertures de passage (22, 23 ; 23' ; 22'').

6. Unité de vanne multivoies (100 ; 100' ; 100'') selon l'une quelconque des revendications précédentes, **caractérisée en ce que** les ouvertures d'embouchure des canaux d'écoulement principaux (41, 43) sur l'élément de commutation (20 ; 20' ; 20'') et l'ouverture de passage correspondante (22) sur l'élément de commutation (20 ; 20' ; 20") sont agencées plus près de l'axe de pivotement (19) que l'ouverture d'embouchure de l'au moins un canal d'écoulement secondaire (42, 44).

7. Unité de vanne multivoies (100 ; 100' ; 100'') selon l'une quelconque des revendications précédentes, **caractérisée en ce qu'**entre au moins une ouverture de passage (22, 23) et le canal de déviation (24, 25 ; 24'', 25''), au moins une entretoise de pontage (26) est réalisée sur l'élément de commutation (20 ; 20' ; 20"), qui est plus étroite que le diamètre de l'ouverture d'embouchure du canal d'écoulement principal (41, 43).

8. Unité de vanne multivoies (100 ; 100' ; 100") selon l'une quelconque des revendications 4 à 7, **caractérisée en ce que** les ouvertures de passage (22, 23) se situent sur la même ligne de rayon et **en ce que** les canaux de déviation (24, 25 ; 24", 25") sont orientés avec leur extension longitudinale radialement entre les cercles partiels (1, 2).

9. Unité de vanne multivoies (100 ; 100' ; 100'') selon l'une quelconque des revendications 4 à 8, **caractérisée en ce que** l'extension tangentielle de l'ouverture de passage (23) située sur le cercle partiel extérieur (2) est plus grande que l'extension tangentielle de l'ouverture de passage (22) située à l'intérieur.

10. Unité de vanne multivoies (100 ; 100' ; 100'') selon la revendication 9, **caractérisée en ce que** l'ouverture de passage extérieure (23') est réalisée sous forme de trou allongé ou en forme d'arc et s'étend le long du cercle partiel extérieur (2).

11. Unité de vanne multivoies (100 ; 100' ; 100'') selon l'une quelconque des revendications précédentes, **caractérisée en ce que** les embouchures respectives du canal d'écoulement principal (41) et du canal d'écoulement secondaire (42) sont agencées dans la plaque d'entrée (11) à la transition vers l'élément de commutation (20 ; 20' ; 20") et dans la plaque de sortie (12) à la transition vers l'élément de commutation (20 ; 20' ; 20'') à l'intérieur d'un polygone qui est défini par plusieurs éléments de serrage (17, 18) s'étendant à travers les plaques (11, 12, 13, 14) situées les unes contre les autres et éventuellement à travers l'élément d'écartement (15).

12. Unité de vanne multivoies (100 ; 100' ; 100'') selon la revendication 11, **caractérisée en ce qu'**il est prévu trois éléments de serrage (17, 18) qui définissent un triangle.

13. Unité de vanne multivoies (100 ; 100' ; 100'') selon l'une quelconque des revendications précédentes, **caractérisée en ce que** le canal de déviation (24, 25 ; 24'', 25'') est formé par au moins une rainure ou une cavité ménagée sur un côté de l'élément de commutation (20 ; 20' ; 20").
